# EUROPEAN PATENT SPECIFICATION

(11) **EP 4 015 355 B1**
(45) Date of publication and mention of the grant of the patent: **09.07.2025**
(21) Application number: 20875195.8
(22) Date of filing: 09.10.2020
(51) Int. Cl.: B62D 25/16, B62D 25/02, B62D 25/08

(54) **REAR WHEEL COVER ASSEMBLY FOR VEHICLE AND VEHICLE**
HINTERRADABDECKUNGSANORDNUNG FÜR EIN FAHRZEUG UND FAHRZEUG
ENSEMBLE ENJOLIVEUR DE ROUE ARRIÈRE POUR VÉHICULE ET VÉHICULE

(30) Priority: 12.10.2019 CN 201910968293
(43) Date of publication of application: 22.06.2022
(73) Proprietor: Great Wall Motor Company Limited, Baoding, Hebei 071000 (CN)
(72) Inventor: WANG, Zhaoqing, Baoding, Hebei 071000 (CN); WANG, Changyi, Baoding, Hebei 071000 (CN); FU, Yuehui, Baoding, Hebei 071000 (CN); ZHAO, Zhi, Baoding, Hebei 071000 (CN)
(74) Representative: Klunker IP Patentanwälte PartG mbB
(86) International application number: PCT/CN2020/119972
(87) International publication number: WO 2021/068886

(56) References cited:
- CN-A- 102 582 387
- CN-A- 102 582 387
- CN-A- 102 582 387
- CN-A- 103 693 115
- CN-A- 106 032 151
- CN-A- 106 043 449
- CN-B- 103 101 579
- CN-U- 202 624 402
- CN-U- 203 854 750
- CN-U- 207 466 282
- CN-U- 207 972 672
- CN-U- 209 111 881
- JP-A- 2018 187 962
- KR-A- 20060 071 799

## Description

### CROSS REFERENCE TO RELATED APPLICATION

The present application claims priority of Chinese Patent Application No. 201910968293.5, filed with the China National Intellectual Property Administration on October 12, 2019.

### FIELD

The present application relates to the technical field of automobiles, and in particular to a rear wheel cover assembly for a vehicle and a vehicle having the rear wheel cover assembly.

### BACKGROUND

In the related art, a rear shock absorber is typically mounted on a rear wheel cover inner plate. Such mounting method is apt to cause the stress concentration at the mounting site, and cracking at the mounting side, which affects the structural strength of the entire vehicle, and further affects the safety of the vehicle. In addition, due to the complex structure of a rear wheel cover, the problem of stress concentration cannot be solved by using a high-strength material or a changing thickness of the structure. The process is also complex and difficult, and the development cost is high, so there is room for improvement.

CN 102582387 A discloses an automobile rear suspension mounting assembly structure comprising a side wall rear upper inner cover, a rear wheel outer bump and a C column reinforcing part, which form a closed section structure.

CN 103101579 B discloses a power transmission structure of an automobile rear shock absorber in an automobile, wherein the power transmission structure comprises a rear-wheel cover shock absorber seat, a parcel shelf assembly which is fixed with the rear-wheel cover shock absorber seat, a C pillar lower reinforcing plate and a rear-wheel cover outside plate reinforcing plate which is fixedly connected with the rear-wheel cover shock absorber seat.

CN 209111881 U discloses a kind of rear shock absorber power transmission components comprising a rear shock absorber support, a rear wheel cover support plate and a spring base, wherein the rear wheel cover outer plate is fixed on the outer wall of rear side wall internal panel lower end and the rear wheel casing inner plate is set on the inner wall of rear side wall internal panel lower end.

CN 106032151 A discloses a connecting structure of a C column reinforcing plate lower joint, wherein the connecting structure comprises a rear wheel casing assembly, a rear floor assembly and the C column reinforcing plate lower joint.

### SUMMARY

In view of this, an object according to the present application is to provide a rear wheel cover assembly for a vehicle, so as to avoid stress concentration and improve structural strength.

In order to achieve the above object, a rear wheel cover assembly and a vehicle according to the independent claims are provided. Further embodiments are specified in the dependent claims.

A rear wheel cover assembly for a vehicle includes a rear wheel cover, the rear wheel cover includes a rear wheel cover inner plate and a rear wheel cover outer plate, and the rear wheel cover outer plate is arranged outside the rear wheel cover inner plate; and a shock absorber support, the shock absorber support is arranged on the rear wheel cover, and the shock absorber support is respectively connected to the rear wheel cover inner plate and the rear wheel cover outer plate.

According to some embodiments of the present application, connections of an outer circumferential edge of the shock absorber support with the rear wheel cover inner plate and the rear wheel cover outer plate form a closed annular shape.

According to some embodiments of the present application, the rear wheel cover assembly for the vehicle further includes a first reinforcing plate, the first reinforcing plate is arranged on a side, opposite to a rear wheel, of the rear wheel cover inner plate, and the rear wheel cover inner plate is connected to a side window inner plate of the vehicle by at least the first reinforcing plate.

According to some embodiments of the present application, the rear wheel cover assembly for the vehicle further includes a second reinforcing plate, the second reinforcing plate is arranged on the side, opposite to the rear wheel, of the rear wheel cover inner plate and is connected to the rear wheel cover inner plate, and an extending direction of the second reinforcing plate is different from an extending direction of the first reinforcing plate.

According to some embodiments of the present application, a projection of a connection between the shock absorber support and the rear wheel cover inner plate and a projection of a connection between the second reinforcing plate and the rear wheel cover inner plate on the rear wheel cover inner plate are at least partially coincident.

According to some embodiments of the present application, the rear wheel cover assembly for the vehicle further includes a third reinforcing plate, where the third reinforcing plate is arranged on a side of the rear wheel cover outer plate opposite to the rear wheel, and the rear wheel cover outer plate is connected to a C-pillar of the vehicle by the third reinforcing plate; and a fourth reinforcing plate, where the fourth reinforcing plate is arranged on the side of the rear wheel cover outer plate opposite to the rear wheel, and the rear wheel cover outer plate is connected to a D-pillar of the vehicle by the fourth reinforcing plate.

Furthermore, the rear wheel cover assembly for the vehicle further includes a connector, the connector is arranged between the third reinforcing plate and the fourth reinforcing plate, and is configured to connect the third reinforcing plate with the fourth reinforcing plate, and the third reinforcing plate, the fourth reinforcing plate and the connector respectively cooperate with and are connected to the side window inner plate.

Furthermore, a projection of a connection between the shock absorber support and the rear wheel cover outer plate and a projection of a connection between the third reinforcing plate and the rear wheel cover outer plate on the rear wheel cover outer plate are at least partially coincident; or, a projection of a connection between the first reinforcing plate and the side window inner plate and a projection of a connection between the fourth reinforcing plate and the side window inner plate on the side window inner plate are at least partially coincident.

Furthermore, a projection of a connection between the first reinforcing plate and the rear wheel cover inner plate and a projection of a connection between the shock absorber support and the rear wheel cover inner plate on the rear wheel cover inner plate are at least partially coincident.

Compared with the conventional technology, the rear wheel cover assembly for the vehicle has the following advantages:

in the rear wheel cover assembly for the vehicle according to the present application, by connecting the shock absorber support with the rear wheel cover inner plate and the rear wheel cover outer plate respectively, the shock absorber support can be dispersed to the rear wheel cover inner plate and the rear wheel cover outer plate after being stressed, which solves the problem of stress concentration, reduces the risk of cracking of the rear wheel cover, improves the strength and stability of the overall structure, and further prolongs the service life of a product and the user experience.

Another object according to the present application is to provide a vehicle, which includes the above rear wheel cover assembly for the vehicle.

Compared with the conventional technology, the advantages of the vehicle according to the present application are the same as the advantages of the rear wheel cover assembly for the vehicle, which may not be repeated here.

### BRIEF DESCRIPTION OF THE DRAWINGS

The drawings constitute a part of the present application and are intended to provide a further understanding of the present application. The exemplary embodiments of the present application and descriptions thereof are intended to explain the present application, and do not constitute an undue limitation to the present application. In the drawings:
FIG. 1 is a schematic structural view of a rear wheel cover assembly;
FIG. 2 is a schematic structural view of the rear wheel cover assembly from another perspective;
FIG. 3 is a sectional view taken along line A-A in FIG. 2;
FIG. 4 is a schematic structural view of the rear wheel cover assembly from another perspective;
FIG. 5 is a sectional view taken along line B-B in FIG. 4;
FIG. 6 is a sectional view taken along line C-C in FIG. 4;
FIG. 7 is a sectional view taken along line G-G in FIG. 4;
FIG. 8 is a sectional view taken along line H-H in FIG. 4;
FIG. 9 is a schematic structural view of the rear wheel cover assembly from another perspective;
FIG. 10 is a sectional view taken along line D-D in FIG. 9;
FIG. 11 is a sectional view taken along line E-E in FIG. 9;
FIG. 12 is a sectional view taken along line F-F in FIG. 9;
FIG. 13 is a schematic structural view of the rear wheel cover assembly from another perspective; and
FIG. 14 is a schematic structural view of the rear wheel cover assembly from another perspective.

The reference numerals in the drawing are listed are as follows:

| | | | |
|---|---|---|---|
| 100 | rear wheel cover assembly; | | |
| 10 | rear wheel cover; | 11 | rear wheel cover inner plate; |
| 12 | rear wheel cover outer plate; | 20 | shock absorber support; |
| 21 | first reinforcing plate; | 22 | second reinforcing plate; |
| 23 | third reinforcing plate; | 24 | fourth reinforcing plate; |
| 25 | connector; | 30 | side window inner plate. |

### DETAILED DESCRIPTION OF THE EMBODIMENTS

It should be noted that embodiments of the present application and features in the embodiments may be in combination with each other as long as there is no conflict.

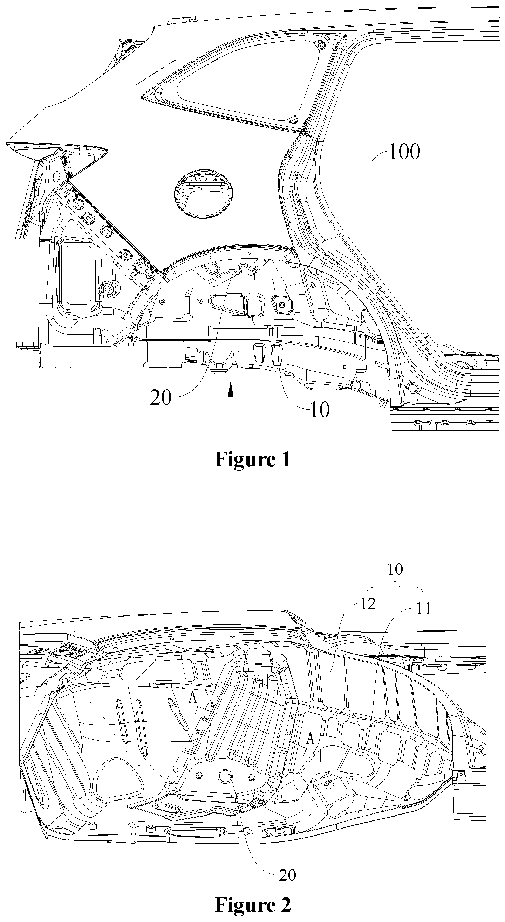

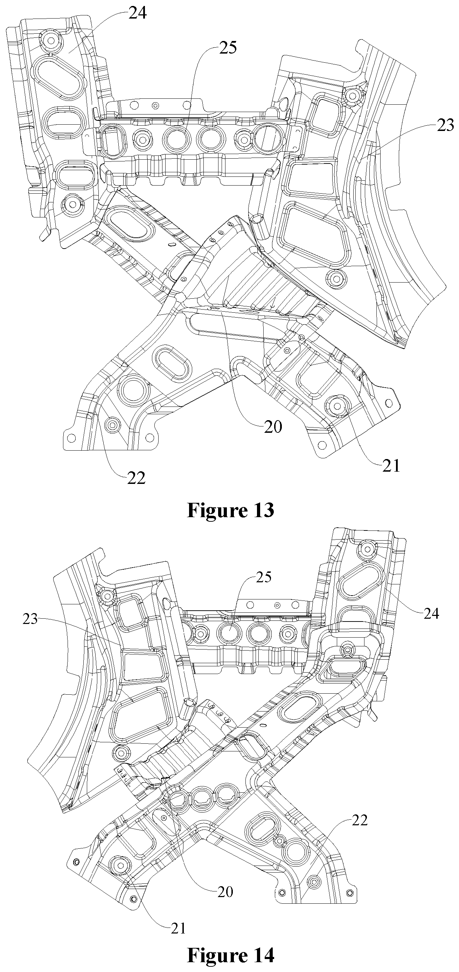

Hereinafter, the present application is described in detail with reference to FIGS. 1 to 14 and in conjunction with the embodiments.

Referring to FIG. 1 and FIG. 2, a rear wheel cover assembly 100 for a vehicle according to the present application includes a rear wheel cover 10 and a shock absorber support 20, the rear wheel cover 10 includes a rear wheel cover inner plate 11 and a rear wheel cover outer plate 12, the rear wheel cover outer plate 12 is arranged outside the rear wheel cover inner plate 11, and the rear wheel cover inner plate 11 and the rear wheel cover outer plate 12 jointly cover a rear wheel, so as to achieve mounting and protecting for the rear wheel. The shock absorber support 20 is arranged on the rear wheel cover 10, the shock absorber support 20 is respectively connected to the rear wheel cover inner plate 11 and the rear wheel cover outer plate 12, and the shock absorber support 20 can provide a mounting point for a shock absorber.

In the rear wheel cover assembly 100 for the vehicle according to the present application, by connecting the shock absorber support 20 with the rear wheel cover inner plate 11 and the rear wheel cover outer plate 12 respectively, a force on the shock absorber support 20 can be dispersed onto the rear wheel cover inner plate 11 and the rear wheel cover outer plate 12, which solves the problem of stress concentration, reduces the risk of cracking of the rear wheel cover 10, improves the strength and stability of the overall structure, and further prolongs the service life of a product and the user experience.

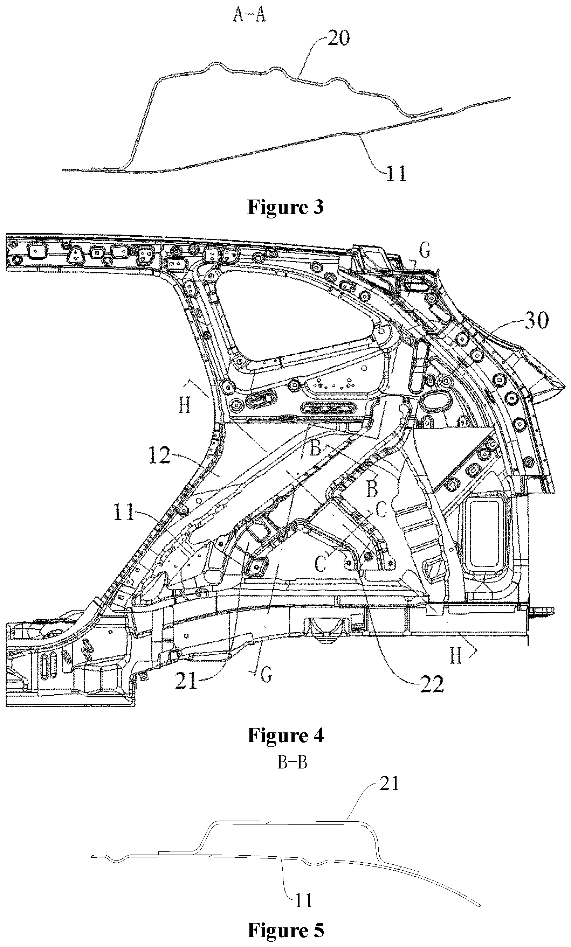

As shown in FIG. 2 and FIG. 3, in some embodiments, a matching structure of the shock absorber support 20 and the rear wheel cover inner plate 11 is a closed section, which improves the structural strength and stability.

In other embodiments, a matching structure of the shock absorber support 20 and the rear wheel cover outer plate 12 is a closed section, which also improves the structural strength and stability.

According to an embodiment of the present application, the shock absorber support 20 is clamped between the rear wheel cover inner plate 11 and the rear wheel cover outer plate 12, connections of an outer circumferential edge of the shock absorber support 20 with the rear wheel cover inner plate 11 and the rear wheel cover outer plate 12 form a closed annular shape. For example, the shock absorber support 20 is reversely buckled on the rear wheel cover 10 in a box-shaped, at this time, any matching structure of the shock absorber support 20 and the rear wheel cover 10 is a closed section, which strengthens the structural strength of the rear wheel cover 10 and increases the force bearing area. After the shock absorber is subjected to a force, the force is uniformly transmitted to the rear wheel cover 10 by the shock absorber support 20, which further solves the problem of stress concentration and prevents the rear wheel cover 10 from cracking.

As shown in FIG. 4, according to an embodiment of the present application, the rear wheel cover assembly 100 further includes a first reinforcing plate 21, the first reinforcing plate 21 is arranged on a side, opposite to the rear wheel, of the rear wheel cover inner plate 11, a part of the first reinforcing plate 21 is cooperated with and connected to the rear wheel cover inner plate 11, another part of the rear wheel cover inner plate 11 is connected to a side window inner plate 30 of the vehicle, so that the rear wheel cover inner plate 11 can be connected to the side window inner plate 30. Thereby, the rear wheel cover inner plate 11 is more closely connected to surrounding members, so that the stress distribution is more uniform, the force transmission efficiency is improved, the problem of stress concentration is solved, and the risk of cracking of the rear wheel cover 10 is reduced.

As shown in FIG. 4 and FIG. 5, in some embodiments, a matching structure of the first reinforcing plate 21 and the rear wheel cover inner plate 11 is a closed section, which improves the structural strength and stability of the first reinforcing plate 21 and the rear wheel cover inner plate 11.

In some embodiments, the rear wheel cover assembly 100 further includes a second reinforcing plate 22, the second reinforcing plate 22 is arranged on the side, opposite to the rear wheel, of the rear wheel cover inner plate 11, and the second reinforcing plate 22 is connected to the rear wheel cover inner plate 11, so as to further improve the structural strength of the rear wheel cover inner plate 11.

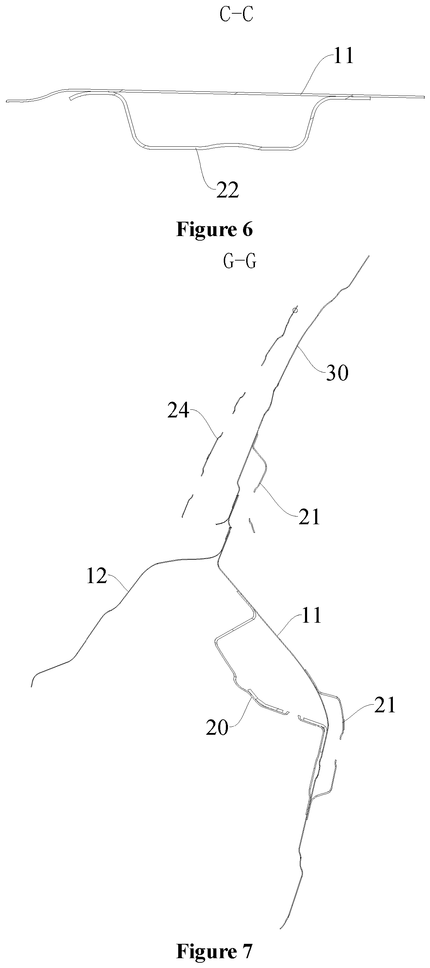

As shown in FIG. 4 and FIG. 6, in some embodiments, a matching structure of the second reinforcing plate 22 and the rear wheel cover inner plate 11 is a closed section, which improves the structural strength and stability of the second reinforcing plate 22 and the rear wheel cover inner plate 11.

As shown in FIG. 4, FIG. 13 and FIG. 14, in some specific embodiments, an extending direction of the second reinforcing plate 22 is different from an extending direction of the first reinforcing plate 21. For example, the first reinforcing plate 22 is connected to the second reinforcing plate 22 in a "Y" shaped structure, so that a triangle is formed among the second reinforcing plate 22, the first reinforcing plate 21 and the rear wheel cover inner plate 11 by using the stability of the triangle, such structure can better strengthen the rear wheel cover inner plate 11 and improve the rigidity of the rear wheel cover inner plate 11, so as to improve the stability of the overall structure.

One end of the second reinforcing plate 22 abuts against a middle portion of the second reinforcing plate 21, so as to further improve the stability of the structure.

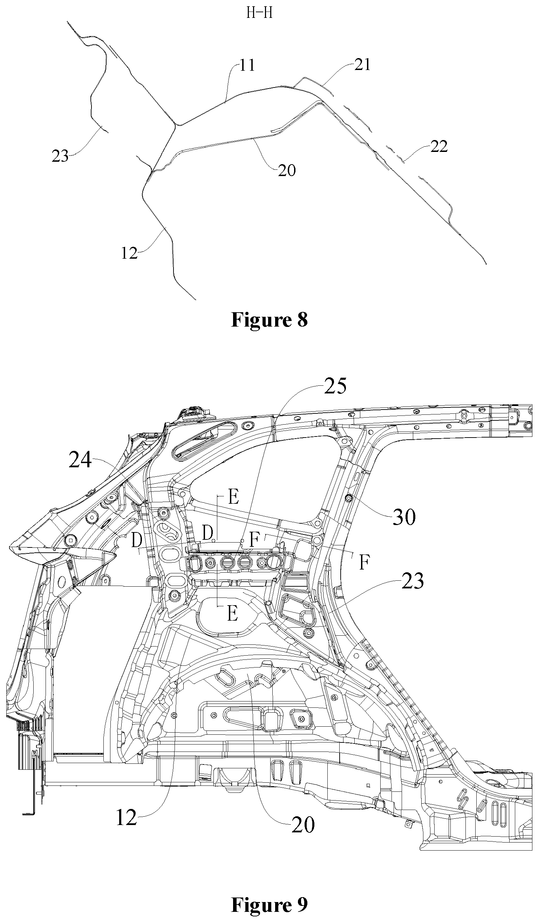

As shown in FIG. 8, in some embodiments, the second reinforcing plate 22 is located on the side, opposite to the shock absorber support 20, of the rear wheel cover inner plate 11, a projection of a connection between the shock absorber support 20 and the rear wheel cover inner plate 11 and a projection of a connection between the second reinforcing plate 22 and the rear wheel cover inner plate 11 on the rear wheel cover inner plate 11 are at least partially coincident, so that the thickness of the connections has been increased, and the second reinforcing plate 22 has a higher strength, which can further improve the strength and rigidity of the rear wheel cover inner plate 11 at the connection, increase the matching area between the shock absorber support 20 and the second reinforcing plate 22, improve the force transmission efficiency of the shock absorber support 20 and avoid stress deformation or cracking at the connection.

In some embodiments, the rear wheel cover assembly 100 further includes a third reinforcing plate 23, the third reinforcing plate 23 is arranged on the side, opposite to the rear wheel, of the rear wheel cover outer plate 12, a part of the third reinforcing plate 23 is connected to the rear wheel cover outer plate 12, another part of the third reinforcing plate 23 is connected to a C-pillar of the vehicle, so that the rear wheel cover outer plate 12 is connected to the C-pillar, the rear wheel cover outer plate 12 is more closely connected to surrounding members, and the force can be transmitted to the C-pillar by the third reinforcing plate when the rear wheel cover outer plate 12 is subjected to the force. That is, such structure increases the connectivity between the rear wheel cover 10 and the C-pillar and improves the force transmission efficiency of the rear wheel cover 10 to the C-pillar while strengthening the strength of the rear wheel cover 10, which further solves the problem of stress concentration and reduces the risk of cracking of the rear wheel cover 10. The third reinforcing plate 23 can be mounted with other structural members in the vehicle, so as to improve the practicability of the third reinforcing plate 23.

In some embodiments, the rear wheel cover assembly 100 further includes a fourth reinforcing plate 24, the fourth reinforcing plate 24 is arranged on the side, opposite to the rear wheel, of the rear wheel cover outer plate 12, a part of the fourth reinforcing plate 24 is connected to the rear wheel cover outer plate 12, and another part of the rear wheel cover outer plate 12 is connected to a D-pillar of the vehicle, so that the rear wheel cover outer plate 12 is connected to the D-pillar, the rear wheel cover outer plate 12 is more closely connected to surrounding members, and the force can be transmitted to the D-pillar by the fourth reinforcing plate 24 when the rear wheel cover outer plate 12 is subjected to the force. Such structure increases the connectivity between the rear wheel cover 10 and the D-pillar and improves the force transmission efficiency of the rear wheel cover 10 to the D-pillar while strengthening the strength of the rear wheel cover 10.

Furthermore, the fourth reinforcing plate 24 can be mounted with other structural members in the vehicle, so as to improve the practicability of the fourth reinforcing plate 24.

In some embodiments, the rear wheel cover assembly 100 further includes a connector 25, the connector 25 is arranged between the third reinforcing plate 23 and the fourth reinforcing plate 24, and the connector 25 is configured to connect the third reinforcing plate 23 with the fourth reinforcing plate 24, so as to improve the stability of the third reinforcing plate 23 and the fourth reinforcing plate 24.

In some embodiments, the third reinforcing plate 23, the fourth reinforcing plate 24 and the connector 25 respectively cooperate with and are connected to the side window inner plate 30, which further increases the structural strength and stability of the third reinforcing plate 23, the fourth reinforcing plate 24 and the connector 25. In addition, a matching relationship between the rear wheel cover outer plate 12 and the side window inner plate 30 is realized by the third reinforcing plate 23 and the fourth reinforcing plate 24, which further strengthens the connection between the rear wheel cover outer plate 12 and surrounding members, improves the force transmission efficiency, and further solves the problem of stress concentration.

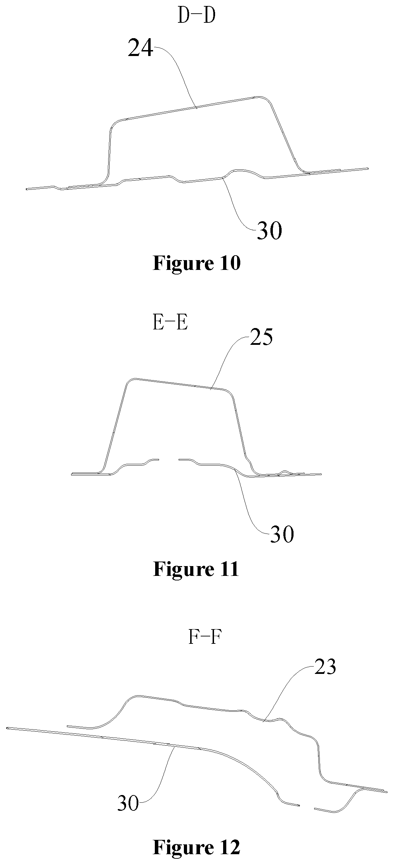

As shown in FIG. 9 and FIG. 12, in some embodiments, a matching structure of the third reinforcing plate 23 and the side window inner plate 30 is a closed section, which improves the structural strength and stability of the third reinforcing plate 23 and the side window inner plate 30 and disperses the stress.

As shown in FIG. 9 and FIG. 10, in some embodiments, a matching structure of the fourth reinforcing plate 24 and the side window inner plate 30 is a closed section, which improves the structural strength and stability of the fourth reinforcing plate 24 and the side window inner plate 30 and disperses the stress.

As shown in FIG. 9 and FIG. 11, in some embodiments, a matching structure of the connector 25 and the side window inner plate 30 is a closed section, which improves the structural strength and stability of the connector 25 and the side window inner plate 30 and disperses the stress.

As shown in FIG. 8, in some embodiments, the third reinforcing plate 23 is located on the side, opposite to the shock absorber support 20, of the rear wheel cover outer plate 12, a projection of a connection between the shock absorber support 20 and the rear wheel cover outer plate 12 and a projection of a connection between the third reinforcing plate 23 and the rear wheel cover outer plate 12 on the rear wheel cover outer plate 12 are at least partially coincident, so that the thickness of the connections has been increased, and the reinforcing structure is continuous, which can further improve the strength and rigidity of the rear wheel cover outer plate 12 at the connection, and avoid stress deformation or cracking at the connection.

As shown in FIG. 7, in some embodiments, the first reinforcing plate 21 is located on inside the side window inner plate 30, the fourth reinforcing plate 24 is located outside the side window inner plate 30, a projection of a connection between the first reinforcing plate 21 and the side window inner plate 30 and a projection of a connection between the fourth reinforcing plate 24 and the side window inner plate 30 on the side window inner plate 30 are at least partially coincident, so that the thickness of the connections has been increased, and the reinforcing structure is continuous, which can further improve the strength and rigidity of the side window inner plate 30 at the connection, and avoid stress deformation or cracking at the connection.

As shown in FIG. 7, in some embodiments, the first reinforcing plate 21 is located on the side, opposite to the shock absorber support 20, of the rear wheel cover inner plate 11, a projection of a connection between the first reinforcing plate 21 and the rear wheel cover inner plate 11 and a projection of a connection between the shock absorber support 20 and the rear wheel cover inner plate 11 on the rear wheel cover inner plate 11 are at least partially coincident, so that the thickness of the connections has been increased, and the connecting strength at the connection of the first reinforcing plate 21 is higher, which can further improve the strength and rigidity of the rear wheel cover inner plate 11 at the connection, increase the matching area between the shock absorber support 20 and the first reinforcing plate 21, improve the force transmission efficiency of the shock absorber support 20 and avoid stress deformation or cracking at the connection.

A vehicle according to another aspect of an embodiment of the present application includes the rear wheel cover assembly 100 for the vehicle in the above embodiments. Specifically, during the operation of the vehicle, the shock absorber is subjected to external force, which is transmitted to the rear wheel cover 10 by the shock absorber support 20, and then transmitted to the C-pillow along the third reinforcing plate 23, and transmitted to the D-pillow along the first reinforcing plate 21 and the fourth reinforcing plate 24, so as to increase the force transmission path and improve the force transmission effect. The transmission force between the third reinforcing plate 23 and the fourth reinforcing plate 24 is balanced by the connector 25, so that the transmission force is more balanced, and the structure of the entire rear wheel cover assembly 100 is more stable.

Therefore, by using the above rear wheel cover assembly 100, the structural strength and rigidity of the rear wheel cover 10 of the vehicle are higher, the stress of the rear wheel cover 10 is more uniform, and the force on the shock absorber support 20 can be decomposed and transmitted more effectively, the problem of stress concentration is solved, and the risk of cracking of the rear wheel cover 10 is fundamentally reduced.

The above is only a preferred embodiment of the present application, and is not intended to limit the present application. Any modifications, equivalent substitutions, improvements made within the scope of the appended claims should be included.

## Claims

1. A rear wheel cover assembly (100) for a vehicle, comprising:
a rear wheel cover (10), wherein the rear wheel cover (10) comprises a rear wheel cover inner plate (11) and a rear wheel cover outer plate (12), and the rear wheel cover outer plate (12) is arranged outside the rear wheel cover inner plate (11); and
a shock absorber support (20), wherein the shock absorber support (20) is arranged on the rear wheel cover (10), and the shock absorber support (20) is respectively connected to the rear wheel cover inner plate (11) and the rear wheel cover outer plate (12),
**characterized in that** connections of an outer circumferential edge of the shock absorber support (20) with the rear wheel cover inner plate (11) and the rear wheel cover outer plate (12) form a closed annular shape.

2. The rear wheel cover assembly (100) for the vehicle according to claim 1, further comprising a first reinforcing plate (21), wherein the first reinforcing plate (21) is arranged on a side, opposite to a rear wheel, of the rear wheel cover inner plate (11), and the rear wheel cover inner plate (11) is connected to a side window inner plate (30) of the vehicle by at least the first reinforcing plate (21).

3. The rear wheel cover assembly (100) for the vehicle according to claim 2, further comprising a second reinforcing plate (22), wherein the second reinforcing plate (22) is arranged on the side, opposite to the rear wheel, of the rear wheel cover inner plate (11) and is connected to the rear wheel cover inner plate (11),
an extending direction of the second reinforcing plate (22) is different from an extending direction of the first reinforcing plate (21).

4. The rear wheel cover assembly (100) for the vehicle according to claim 3, wherein the first reinforcing plate (21) is connected to the second reinforcing plate (22) in a "Y" shaped structure, so that a triangle is formed among the second reinforcing plate (22), the first reinforcing plate (21) and the rear wheel cover inner plate (11).

5. The rear wheel cover assembly (100) for the vehicle according to claim 4, wherein one end of the second reinforcing plate (22) abuts against a middle portion of the second reinforcing plate (22).

6. The rear wheel cover assembly (100) for the vehicle according to claim 3, wherein a projection of a connection between the shock absorber support (20) and the rear wheel cover inner plate (11) and a projection of a connection between the second reinforcing plate (22) and the rear wheel cover inner plate (11) on the rear wheel cover inner plate (11) are at least partially coincident.

7. The rear wheel cover assembly (100) for the vehicle according to claim 2, further comprising a third reinforcing plate (23), wherein the third reinforcing plate (23) is arranged on a side, opposite to the rear wheel, of the rear wheel cover outer plate (12), and the rear wheel cover outer plate (12) is connected to a C-pillar of the vehicle by the third reinforcing plate (23); and
a fourth reinforcing plate (24), wherein the fourth reinforcing plate (24) is arranged on the side, opposite to the rear wheel, of the rear wheel cover outer plate (12), and the rear wheel cover outer plate (12) is connected to a D-pillar of the vehicle by the fourth reinforcing plate (24).

8. The rear wheel cover assembly (100) for the vehicle according to claim 7, further comprising a connector (25), wherein the connector (25) is arranged between the third reinforcing plate (23) and the fourth reinforcing plate (24), and is configured to connect the third reinforcing plate (23) with the fourth reinforcing plate (24),
the third reinforcing plate (23), the fourth reinforcing plate (24) and the connector (25) respectively cooperate with and are connected to the side window inner plate (30).

9. The rear wheel cover assembly (100) for the vehicle according to claim 8, wherein a projection of a connection between the shock absorber support (20) and the rear wheel cover outer plate (12) and a projection of a connection between the third reinforcing plate (23) and the rear wheel cover outer plate (12) on the rear wheel cover outer plate (12) are at least partially coincident; or
a projection of a connection between the first reinforcing plate (21) and the side window inner plate (30) and a projection of a connection between the fourth reinforcing plate (24) and the side window inner plate (30) on the side window inner plate (30) are at least partially coincident.

10. The rear wheel cover assembly (100) for the vehicle according to claim 2, wherein a projection of a connection between the first reinforcing plate (21) and the rear wheel cover inner plate (11) and a projection of a connection between the shock absorber support (20) and the rear wheel cover inner plate (11) on the rear wheel cover inner plate (11) are at least partially coincident.

11. A vehicle, comprising the rear wheel cover assembly (100) for the vehicle according to any one of claims 1 to 10.

## Patentansprüche

1. Hinterradabdeckungsanordnung (100) für ein Fahrzeug, aufweisend:
eine Hinterradabdeckung (10), wobei die Hinterradabdeckung (10) eine Hinterradabdeckungs-Innenplatte (11) und eine Hinterradabdeckungs-Außenplatte (12) aufweist, und die Hinterradabdeckungs-Außenplatte (12) außerhalb der Hinterradabdeckungs-Innenplatte (11) angeordnet ist; und
eine Stoßdämpferstütze (20), wobei die Stoßdämpferstütze (20) an der Hinterradabdeckung (10) angeordnet ist und die Stoßdämpferstütze (20) jeweils mit der Hinterradabdeckung-Innenplatte (11) und der Hinterradabdeckung-Außenplatte (12) verbunden ist,
**dadurch gekennzeichnet, dass** Verbindungen einer Außenumfangskante der Stoßdämpferstütze (20) mit der Hinterradabdeckungs-Innenplatte (11) und der Hinterradabdeckungs-Außenplatte (12) eine geschlossene Ringform bilden.

2. Hinterradabdeckungsanordnung (100) für das Fahrzeug nach Anspruch 1, weiter aufweisend eine erste Verstärkungsplatte (21), wobei die erste Verstärkungsplatte (21) auf einer einem Hinterrad gegenüberliegenden Seite der Hinterradabdeckungs-Innenplatte (11) angeordnet ist und die Hinterradabdeckungs-Innenplatte (11) über mindestens die erste Verstärkungsplatte (21) mit einer Seitenfenster-Innenplatte (30) des Fahrzeugs verbunden ist.

3. Hinterradabdeckungsanordnung (100) für das Fahrzeug nach Anspruch 2, weiter aufweisend eine zweite Verstärkungsplatte (22), wobei die zweite Verstärkungsplatte (22) auf der dem Hinterrad gegenüberliegenden Seite der Hinterradabdeckung-Innenplatte (11) angeordnet und mit der Hinterradabdeckung-Innenplatte (11) verbunden ist,
wobei sich eine Erstreckungsrichtung der zweiten Verstärkungsplatte (22) von einer Erstreckungsrichtung der ersten Verstärkungsplatte (21) unterscheidet.

4. Hinterradabdeckungsanordnung (100) für das Fahrzeug nach Anspruch 3, wobei die erste Verstärkungsplatte (21) mit der zweiten Verstärkungsplatte (22) in einer Y-förmigen Struktur verbunden ist, sodass zwischen der zweiten Verstärkungsplatte (22), der ersten Verstärkungsplatte (21) und der Hinterradabdeckung Innenplatte (11) ein Dreieck gebildet ist.

5. Hinterradabdeckungsanordnung (100) für das Fahrzeug nach Anspruch 4, wobei ein Ende der zweiten Verstärkungsplatte (22) an einem mittleren Abschnitt der zweiten Verstärkungsplatte (22) anliegt.

6. Hinterradabdeckungsanordnung (100) für das Fahrzeug nach Anspruch 3, wobei ein Vorsprung einer Verbindung zwischen der Stoßdämpferstütze (20) und der Hinterradabdeckung-Innenplatte (11) und ein Vorsprung einer Verbindung zwischen der zweiten Verstärkungsplatte (22) und der Hinterradabdeckung-Innenplatte (11) an der Hinterradabdeckung-Innenplatte (11) zumindest teilweise zusammenfallen.

7. Hinterradabdeckungsanordnung (100) für das Fahrzeug nach Anspruch 2, weiter aufweisend eine dritte Verstärkungsplatte (23), wobei die dritte Verstärkungsplatte (23) auf einer dem Hinterrad abgewandten Seite der Hinterradabdeckung Außenplatte (12) angeordnet ist und die Hinterradabdeckung Außenplatte (12) durch die dritte Verstärkungsplatte (23) mit einer C-Säule des Fahrzeugs verbunden ist; und
eine vierte Verstärkungsplatte (24), wobei die vierte Verstärkungsplatte (24) auf der dem Hinterrad gegenüberliegenden Seite der Außenplatte (12) der Hinterradabdeckung angeordnet ist und die Außenplatte (12) der Hinterradabdeckung durch die vierte Verstärkungsplatte (24) mit einer D-Säule des Fahrzeugs verbunden ist.

8. Hinterradabdeckungsanordnung (100) für das Fahrzeug nach Anspruch 7, weiter aufweisend ein Verbindungselement (25), wobei das Verbindungselement (25) zwischen der dritten Verstärkungsplatte (23) und der vierten Verstärkungsplatte (24) angeordnet ist und konfiguriert ist, die dritte Verstärkungsplatte (23) mit der vierten Verstärkungsplatte (24) zu verbinden,
wobei die dritte Verstärkungsplatte (23), die vierte Verstärkungsplatte (24) und das Verbindungselement (25) jeweils mit der Seitenfenster-Innenplatte (30) zusammenwirken und mit dieser verbunden sind.

9. Hinterradabdeckungsanordnung (100) für das Fahrzeug nach Anspruch 8, wobei ein Vorsprung einer Verbindung zwischen der Stoßdämpferstütze (20) und der Außenplatte (12) der Hinterradabdeckung und ein Vorsprung einer Verbindung zwischen der dritten Verstärkungsplatte (23) und der Außenplatte (12) der Hinterradabdeckung auf der Außenplatte (12) der Hinterradabdeckung zumindest teilweise zusammenfallen; oder
ein Vorsprung einer Verbindung zwischen der ersten Verstärkungsplatte (21) und der Seitenfenster-Innenplatte (30) und ein Vorsprung einer Verbindung zwischen der vierten Verstärkungsplatte (24) und der Seitenfenster-Innenplatte (30) an der Seitenfenster-Innenplatte (30) zumindest teilweise zusammenfallen.

10. Hinterradabdeckungsanordnung (100) für das Fahrzeug nach Anspruch 2, wobei ein Vorsprung einer Verbindung zwischen der ersten Verstärkungsplatte (21) und der Hinterradabdeckung Innenplatte (11) und ein Vorsprung einer Verbindung zwischen der Stoßdämpferstütze (20) und der Hinterradabdeckung Innenplatte (11) an der Hinterradabdeckung Innenplatte (11) zumindest teilweise zusammenfallen.

11. Fahrzeug, mit der Hinterradabdeckungsanordnung (100) für das Fahrzeug nach einem der Ansprüche 1 bis 10.

## Revendications

1. Ensemble enjoliveur de roue arrière (100) pour un véhicule, comprenant :
un enjoliveur de roue arrière (10), dans lequel l'enjoliveur de roue arrière (10) comprend une plaque interne d'enjoliveur de roue arrière (11) et une plaque externe d'enjoliveur de roue arrière (12), et la plaque externe d'enjoliveur de roue arrière (12) est agencée à l'extérieur de la plaque interne d'enjoliveur de roue arrière (11) ; et
un support absorbeur de chocs (20), dans lequel le support absorbeur de chocs (20) est agencé sur l'enjoliveur de roue arrière (10), et le support absorbeur de chocs (20) est respectivement connecté à la plaque interne d'enjoliveur de roue arrière (11) et à la plaque externe d'enjoliveur de roue arrière (12),
**caractérisé en ce que** des connexions d'un bord circonférentiel externe du support absorbeur de chocs (20) avec la plaque interne d'enjoliveur de roue arrière (11) et la plaque externe d'enjoliveur de roue arrière (12) forment une forme annulaire fermée.

2. Ensemble enjoliveur de roue arrière (100) pour le véhicule selon la revendication 1, comprenant en outre une première plaque de renforcement (21), dans lequel la première plaque de renforcement (21) est agencée sur un côté, opposé à une roue arrière, de la plaque interne d'enjoliveur de roue arrière (11), et la plaque interne d'enjoliveur de roue arrière (11) est connectée à une plaque interne de fenêtre latérale (30) du véhicule par au moins la première plaque de renforcement (21).

3. Ensemble enjoliveur de roue arrière (100) pour le véhicule selon la revendication 2, comprenant en outre une deuxième plaque de renforcement (22), dans lequel la deuxième plaque de renforcement (22) est agencée sur le côté, opposé à la roue arrière, de la plaque interne d'enjoliveur de roue arrière (11) et est connectée à la plaque interne d'enjoliveur de roue arrière (11),
une direction d'extension de la deuxième plaque de renforcement (22) est différente d'une direction d'extension de la première plaque de renforcement (21).

4. Ensemble enjoliveur de roue arrière (100) pour le véhicule selon la revendication 3, dans lequel la première plaque de renforcement (21) est connectée à la deuxième plaque de renforcement (22) selon une structure en forme de "Y" de telle sorte qu'un triangle soit formé entre la deuxième plaque de renforcement (22), la première plaque de renforcement (21) et la plaque interne d'enjoliveur de roue arrière (11).

5. Ensemble enjoliveur de roue arrière (100) pour le véhicule selon la revendication 4, dans lequel une extrémité de la deuxième plaque de renforcement (22) vient en butée contre une partie intermédiaire de la deuxième plaque de renforcement (22).

6. Ensemble enjoliveur de roue arrière (100) pour le véhicule selon la revendication 3, dans lequel une projection d'une connexion entre le support absorbeur de chocs (20) et la plaque interne d'enjoliveur de roue arrière (11) et une projection d'une connexion entre la deuxième plaque de renforcement (22) et la plaque interne d'enjoliveur de roue arrière (11) sur la plaque interne d'enjoliveur de roue arrière (11) coïncident au moins partiellement.

7. Ensemble enjoliveur de roue arrière (100) pour le véhicule selon la revendication 2, comprenant en outre :
une troisième plaque de renforcement (23), dans lequel la troisième plaque de renforcement (23) est agencée sur un côté, opposé à la roue arrière, de la plaque externe d'enjoliveur de roue arrière (12), et la plaque externe d'enjoliveur de roue arrière (12) est connectée à un pilier C du véhicule par la troisième plaque de renforcement (23) ; et
une quatrième plaque de renforcement (24), dans lequel la quatrième plaque de renforcement (24) est agencée sur le côté, opposé à la roue arrière, de la plaque externe d'enjoliveur de roue arrière (12), et la plaque externe d'enjoliveur de roue arrière (12) est connectée à un pilier D du véhicule par la quatrième plaque de renforcement (24).

8. Ensemble enjoliveur de roue arrière (100) pour le véhicule selon la revendication 7, comprenant en outre un connecteur (25), dans lequel le connecteur (25) est agencé entre la troisième plaque de renforcement (23) et la quatrième plaque de renforcement (24), et est configuré pour connecter la troisième plaque de renforcement (23) à la quatrième plaque de renforcement (24),
la troisième plaque de renforcement (23), la quatrième plaque de renforcement (24) et le connecteur (25) coopèrent respectivement avec la plaque interne de fenêtre latérale (30) et lui sont connectés.

9. Ensemble enjoliveur de roue arrière (100) pour le véhicule selon la revendication 8, dans lequel :
une projection d'une connexion entre le support absorbeur de chocs (20) et la plaque externe d'enjoliveur de roue arrière (12) et une projection d'une connexion entre la troisième plaque de renforcement (23) et la plaque externe d'enjoliveur de roue arrière (12) sur la plaque externe d'enjoliveur de roue arrière (12) coïncident au moins partiellement ; ou
une projection d'une connexion entre la première plaque de renforcement (21) et la plaque interne de fenêtre latérale (30) et une projection d'une connexion entre la quatrième plaque de renforcement (24) et la plaque interne de fenêtre latérale (30) sur la plaque interne de fenêtre latérale (30) coïncident au moins partiellement.

10. Ensemble enjoliveur de roue arrière (100) pour le véhicule selon la revendication 2, dans lequel une projection d'une connexion entre la première plaque de renforcement (21) et la plaque interne d'enjoliveur de roue arrière (11) et une projection d'une connexion entre le support absorbeur de chocs (20) et la plaque interne d'enjoliveur de roue arrière (11) sur la plaque interne d'enjoliveur de roue arrière (11) coïncident au moins partiellement.

11. Véhicule, comprenant l'ensemble enjoliveur de roue arrière (100) pour le véhicule selon l'une quelconque des revendications 1 à 10.
